# EUROPEAN PATENT SPECIFICATION

(11) **EP 3 028 582 B1**
(45) Date of publication and mention of the grant of the patent: **07.07.2021**
(21) Application number: 14832766.1
(22) Date of filing: 24.04.2014
(51) Int. Cl.: A23L 19/00, A23L 3/015, A23L 3/3508, A23L 3/3571, A23B 7/155, A23B 7/005, A23B 7/06, A23B 7/10

(54) **METHOD FOR PRODUCING VEGETABLE PRODUCTS USING ULTRA HIGH PRESSURE**
VERFAHREN ZUR HERSTELLUNG PFLANZLICHER PRODUKTE MITTELS ULTRAHOCHDRUCK
PROCÉDÉ DE PRODUCTION DE PRODUITS À BASE DE LÉGUMES FAISANT APPEL À L'ULTRA-HAUTE PRESSION

(30) Priority: 31.07.2013 KR 20130091017
(43) Date of publication of application: 08.06.2016
(73) Proprietor: CJ Cheiljedang Corporation, Seoul 04560 (KR)
(72) Inventor: MOON, Sang Young, Seoul 121-060 (KR); KANG, Dae Ik, Goyang-si Gyeonggi-do 411-750 (KR); KIM, Sung Kyun, Seoul 152-836 (KR); CHO, Won Il, Seoul 158-774 (KR); CHOI, Su Hee, Gunpo-si Gyeonggi-do 435-727 (KR)
(74) Representative: Dehns
(86) International application number: PCT/KR2014/003616
(87) International publication number: WO 2015/016458

(56) References cited:
- WO-A1-95/08275
- FR-A1- 2 779 035
- JP-A- H0 530 951
- JP-A- 2006 212 001
- KR-A- 20090 040 540
- KR-A- 20090 040 540
- KR-A- 20120 031 706
- KR-B1- 0 159 678
- KR-B1- 100 550 447
- US-A- 6 017 572
- US-A- 6 086 936
- US-A1- 2002 182 107
- US-A1- 2004 191 382
- US-A1- 2011 217 435
- None

## Description

### [Technical Field]

The present invention relates to a method for producing vegetable products, which effectively sterilizes fungi, yeast, pathogenic bacteria, spores of a sporogenic microorganism, etc. growing in raw vegetables and cooked vegetables, using a non-heat-treated ultra-high pressure sterilization process.

### [Background Art]

The representative well-being food, Bibimbob, is a menu leading the globalization of Korean food and its sales have been enlarged in the various global markets such as U.S.A., Europe, China, Janan, etc. But, there are many problems in the processed food due to a storage quality limit of the vegetables and various cooking vegetables which are main materials, and thus, there are limitations in its enlargement in the global markets at present. Therefore, it can be as important as anything else to obtain the optimum production measure which is excellent in a processing quality.

At present, the producing method of the processing vegetables is limited to a weak heating and drying, freezing treatment which can minimize an organoleptic quality damage. Heat sterilization method includes blanching at 100°C for several seconds or post-sterilization at 85°C for 10 minutes or so, but, although it is a mild condition, a deterioration in quality by heating is occurred due to the property of the vegetables which are weak under the heat, and also the effective reduction of germs is difficult in the case of the heat-resistant germs.

The method which is widely used as the most common long-term storage method at present is a drying method, and the representative example in the commercial drying methods is a hot-air drying. Since the hot-air drying has a sharp decline of the organoleptic quality such as a taste, flavor, texture, color, etc. after drying, and also has many cases in which a restoration is needed by heat-cooking in water, and thus, it follows many limitations in its use.

Freezing drying is a drying method in which the chemical or physical changes such as volatilization or decomposition of a flavor components which is a weakness of the hot-air drying, browning reaction by an oxidation at a high temperature, a surface change according to a mutual coupling of fiber and pectin material and the like can be minimized, but there are weaknesses that a restoration in water is necessarily needed, a convenience is decreased and a cost of production is expensive. Even in the case of the freezing vegetables, since it needs a thawing processing, the deterioration in quality is followed, and the convenience in transportation, storage and the like may be decreased.

The other method includes a reduction of germs and sterilization of microorganisms via dipping, spraying and the like by using the various natural antimicrobials such as alcohol, organic acid, surfactant, bacteriocin, calcium agent, etc., but since their effects controlling the microorganisms are relatively low, and the degradation in the organoleptic quality is caused, many limitations in the use are followed.

Accordingly, since the present processing and sterilization processes can not effectively control the microorganisms and extend a shelf life, new sterilization method which can effectively control microorganisms in the vegetable processing foods is needed.

### [Disclosure]

### [Technical Problem]

The present invention developed a technique and process killing microorganisms in the vegetables by using ultra-high pressure as new sterilization method which makes various raw vegetables which have the limitation in their uses due to the above reasons be widely used as a major raw material of the processed foods, and is effective for enhancing the quality of the vegetable-based processed foods.

The ultra-high pressure technique is non-heating sterilization technique and effectively controls the microorganisms with minimal effects in the chemical reaction such as the flavor, color and nutrition, etc. of foods and is mainly used in putting a premium of a group of the refrigerated distribution products such as beverage, source, jam, meat processing, fish processing and the like, but is not actively applied in the fields of the processed foods of vegetables yet.

Accordingly, the object of the present invention is to provide the processing method of vegetable foods which is characterized in effectively killing pathogenic bacteria and spore of sporulation microbes in the raw vegetable and processed vegetable by using the ultra-high pressure non-heating sterilization method as recited in the appended claims.

### [Technical Solution]

In order to achieve the above object, the present invention provides the processing method of vegetable foods, which is characterized in killing yeast, mold and pathogenic microbes by the process recited in the appended claims.

### [Advantageous Effects]

The new sterilization method for the pathogenic bacteria and spore of sporulation micobes via the ultra-high pressure and the combination of the organic acid and natural antibacterial agent under the condition of the room temperature and heating of the present invention can be variously used as the commercial sterilization technique which minimizes the damage of the quality in the raw vegetable and various vegetable processing foods due to the heat, and can effectively sterilize various microbes related to the hygiene and deterioration of quality.

### [Description of Drawings]

FIG.1 is a flow chart representing the sterilization process for cooked vegetable, which comprises the ultra-high pressure non-heating sterilization process.
FIG. 2 is a drawing representing the sterilization effect of the pathogenic microbes in the peptone water by using ultra-high pressure.
FIG. 3 is a drawing representing the sterilization effect for the phathogenic microbes in the raw vegetables by using ultra-high pressure. Unit in a vertical axis is Log (N/No), and is a value represented as Log data for the numbers of microbes after sterilization relative to those of microbes in the first.
FIG. 4 is a drawing representing the sterilization effect for the pathogenic microbes in the cooked vegetables using ultra-high pressure.
FIG. 5 is a drawing representing the sterilization effect at the time of treating in combination with ultra-high pressure and pH control. (A) pH 7.2, (B) pH 4.0, (C) pH 5.0, (D) pH 6.0. The group controlled with HCl is represented as □, and the group controlled with lactic acid is represented as ■. Alphabets A∼D, a∼b written in each graph are markers divided according to a significant difference (p<0.05) at the time of data statistic processing of each of data, mean that no significant difference is present between the same alphabets (e.g., A-A, b-b).
FIG. 6 is an electron microscopy photograph of the pathogenic microbes treated in combination with ultra-high pressure and pH control.
FIG. 7 is a drawing representing the sterilization effect at the time of treating in combination with the ultra-high pressure and pH control and nisin. The nisin addition group is represented as (+), and non-nisin addition group is represented as (-).
FIG. 8 is an electron microscopy photograph of the pathogenic microbes when treating in combination of ultra-high pressure and pH control and nicin.
FIG. 9 is a drawing for the contents of ascorbic acid and cartinoid of the extra-high valtage-treated vegetables.
   The contents of ascorbic acid and a total of carotinoid (Carrot (■), spinach (□)
   A-C: Classification according to the verification for significant difference of an average value in each carrot sample (p<0.05) (No significant difference in the case of the same alphabet)
   a-c; Classification according to the verification for significant difference of an average value in each spinach sample (p<0.05) (No significant difference in the case of the same alphabet)

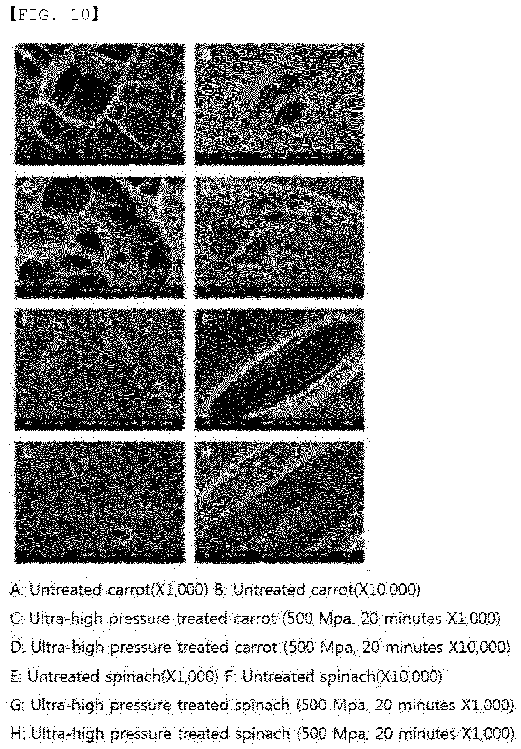

FIG. 10 is an electron microscopy photograph of the ultra-high pressure treated vegetable.

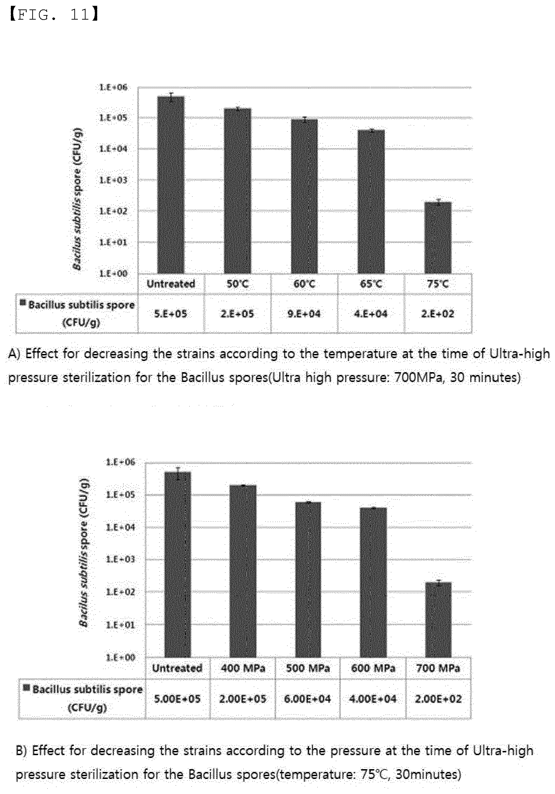

FIG. 11 is a drawing representing the sterilization effect for Bacillus spore by using the ultra-high pressure.

### [Best Mode for Invention]

Hereinafter, the present invention will be explained in detail.

The first embodiment of the present invention provides the method as recited first in the appended claims.

The vegetable foods is a concept comprising a fresh vegetable and the cooked vegetable and foods by using them, and the fresh vegetable means the vegetables which go through steps of washing, dehydrating, selecting, measuring the quantity, and the like and do not go through the step of cooking, the cooked vegetables mean the vegetables which go through the cooking step such as blanching and the like as that added the boiling water and cooling process to the process such as washing, dehydrating, selecting, measuring the quantity, and the like.

The step (a) for selecting vegetable raw material can mean one which goes through the selecting and measuring the quantity after washing and dehydrating the vegetable raw materials. For example, the vegetable raw material can be washed three times by using the general tap water, and the water of the washed vegetable raw material can be removed by using a dehydrator or via a natural dehydration. After then, a volume which is used in the product (for example, 50g) can be quantitatively isolated through the selecting process excluding the vegetables which are not in good condition, such as those having the torn or softened leaves or a disease, a yellow color, and the like.

The wrapping step (b) can use a vacuum packing. For example, the selected vegetable raw material can be vacuum packed by placing it in the transparent vinyl pouch.

The sterilization step (c) is that sterilizing the microorganisms in the vegetable raw material by applying the constant temperature, time and pressure conditions to the wrapped vegetable raw material with the ultra-high pressure, and the pressure can be applied as 200∼900 MPa at the room temperature for 3∼60 minutes.

The ultra-high pressure non-heating sterilization method is one of the sterilization methods for the microorganisms, and has a great effect in keeping the quality of the foods itself and inactivating the microorganisms and enzymes.

The room temperature can be 15∼20°C in the present invention.

Another embodiment of the present invention can further comprise a semi-drying step for partially removing the water in the selected vegetable raw materials before the wrapping step; and a boiling water and cooling steps for blanching and then cooling the wrapping vegetable raw material after the wrapping step.

The semi-drying step can be performed to prevent syneresis phenomenon which can be occurred when performing the refrigerator storage after going through the wrapping step and the boiling water step to be mentioned later. For example, a part of the water in the vegetable raw material was removed by performing the drying process at the temperature of 55°C for 20 minutes.

The boiling water and cooling steps are the processes performing the boiling water process such as blanching the vegetable raw material which went through the wrapping step and then cooling it, and it has advantages that microorganisms in the vegetable raw material are primarily killed and the organoleptic quality such as a taste, flavor, color, texture and the like can be enhanced. In addition, the damage of the quality due to the heat can be minimized by directly cooling it with flowing water soon after performing the boiling water process (the basic heat-cooking process).

As the second embodiment, the present invention is defined as in the appended claims.

The use of the ultra-high pressure under the pressure of 200∼900 MPa at the room temperature (25°C) for 3∼60 minutes can sterilize the yeast, mold, pathogenic microbes, etc., without the damage of the quality due to the heat treatment and addition of the synthetic preservatives, but the application of the pressure of 200∼900 MPa at the temperature of 70∼100°C for 3∼60 minutes can also kill the spores of the sporulation microbes and the shelf life can be extended. It is general that the sporulation microbes are killed under the high temperature pasteurization condition (retort) of 121 °C, 2.1 Kgf/cm², the organoleptic quality such as taste, texture, color and the like can be relatively enhanced by killing them under the low heating temperature condition such as 70∼100°C, 500∼900 MPa for 3∼60 minutes described in the present invention, and it has an advantage that the effect is great in the vegetable-based processed foods wherein the color, texture and the like are important.

Another embodiment of the present invention can further comprise a semi-drying step for partially removing the water in the selected vegetable raw materials before the wrapping step; and the boiling water and cooling steps for blanching and then cooling the wrapping vegetable raw material after the wrapping step.

Since the detailed description for each step is substantially the same as that previously explained, the overlapping explanation will be omitted.

The natural antimicrobials can be selected from the group consisting of organic acid, nisin and calcium agent. It is preferable that the natural antimicrobials are added as 0.05∼3% (w/w) based on a total weight, and more preferably, are characterized by adding 0.5% (w/w).

Preferably, the above natural antimicrobials can be organic acids selected from the group consisting of lactic acid, acetic acid, citric acid, and succinic acid, and more preferably the organic acid can be lactic acid.

The natural antimicrobials can be used by overall considering the expected sterilization effect for the product and the effect affecting the organoleptic quality such as the taste, flavor, color, texture, etc., of the product.

Lactic acid generates the sterilization effect by being diffused into the cytoplasm via a cellular membrane of the microorganism and then affecting proteins and nucleic acids which are necessary for growing.

In order to further increase the sterilization effect when treating in combination of the ultra-high pressure and organic acids, nisin being bacteriocin line as the natural antimicrobial is added. At this time, the addition amount of nisin, 0.01∼1.0%, is proper and it can be changed when considering the effect affecting the organoleptic quality of the subject foods.

More preferably, the present invention controls pH of the vegetable foods to the acidic condition, pH 4∼5 by using the organic acid.

The addition of the organic acid can be performed before vacuum-packing. The treatment of the organic acid can be performed in the manner of dipping the fresh vegetable and the heat-cooking vegetable into the organic acid solution, or spraying the organic acid on the surface of the vegetable.

Hereinafter, the preferable examples are provided to help the understanding of the present invention. However, the below examples are merely provided to more easily understand the present invention, and the present invention is not limited by the below examples.

### [Best Mode for Invention]

### Example 1-1: Production of the fresh vegetable food

The representative processing method of the fresh vegetables by applying the ultra-high pressure non-heating sterilization is as follows, and as the vegetable raw materials, carrot, spinach, bean sprout, bracken, etc. which are vegetable raw materials for the representative Korean global dish of, bibimbob, were used.

### (1) Washing and dehydrating, selecting process

In order to remove pollutants such as dust, foreign material, and the like, attached to the surface of the vegetable raw materials, they were washed three times with clear water, and then were spin-dehydrated with spin-dryer at 700 rpm, for 1 minute.

After dehydration, the vegetable raw materials were selected by removing the raw materials having damage, disease or insect pest.

### (2) Vacuum-packing process

The selected vegetable raw materials were placed in the clear vinyl pouch and then were vacuum-wrapped.

### (3) The ultra-high pressure sterilization process

The fresh vegetable food was prepared by treating the vacuum-wrapped and the heating-cooked vegetable raw materials under ultra-high pressure of 500 MPa for 3∼10 minutes.

### Example 1-2: preparation of the cooked vegetable food

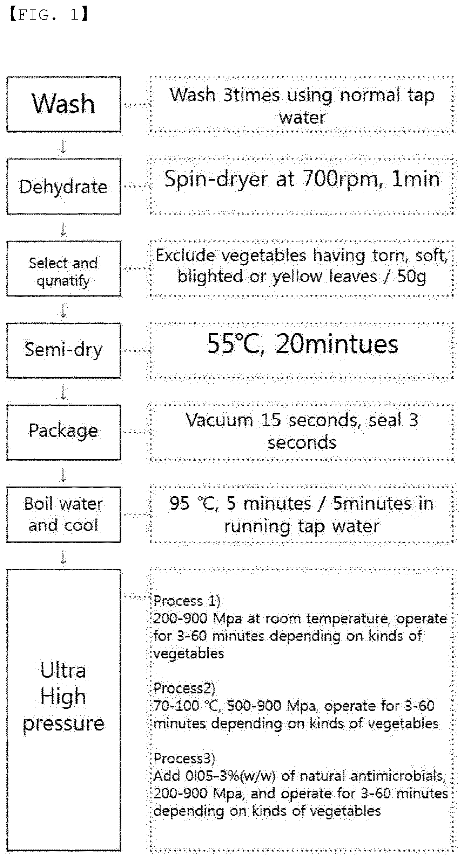

The representative processing process by applying the ultra-high pressure non-heating sterilization was as follows, its flow chart is represented in FIG. 1. As the vegetable raw material, spinach and carrot were used.

### (1) Washing and dehydrating, selecting process

In order to remove pollutants such as dust, foreign material, and the like, attached to the surface of the vegetable raw materials, they were washed three times with clear water and then were spin-dehydrated with spin-dryer at 700 rpm, for 1 minute.

After dehydration, the vegetable raw materials were selected by removing the raw materials having damage, disease or insect pest.

### (2) Semi-drying process

In order to minimize the syneresis phenomenon occurred when refrigerating the vegetable raw materials after vacuum-wrapping and heat-cooking, moisture in the vegetable raw material was removed via a semi-drying process at the temperature of 55°C for 20 minutes.

### (3) Vacuum-packing process

The vegetable raw materials after the semi-drying were placed in a clear vinyl pouch and then was vacuum-wrapped.

### (4) Boiling water and cooling process

The basic heat-cooking process killing some of microorganisms such as Escherichia coli, etc. in the vegetable raw materials via blanching at the temperature of 95°C for 5 minutes, and enhancing the organoleptic quality such as the taste, flavor, color, texture, and the like, was performed. If the basic heating-cooking process in the boiling water was completed, the cooling step was immediately performed to minimize the damage of quality due to the heat.

In general, the vegetable blanching was performed by dipping the vegetables in the boiling water, but in the present invention, since they were vacuum-wrapped in the wrapping weight of about 50 g, the heat transfer can be sufficiently occurred even by applying blanching process and the intended condition such as killing of some of microorganisms, enhancement of the organoleptic quality and the like can be achieved, and thus, the blanching was performed after vacuum-wrapping the semi-drying vegetables in the pouch.

### (5) The ultra-high pressure sterilization process

The fresh vegetable food was prepared by treating the vacuum-wrapped and the heating-cooked vegetable raw materials under ultra-high pressure of 500 MPa for 3∼10 minutes.

### Example 2: The preparation of pathogenic microbes and the preparation of the test samples

The representative pathogenic contaminable strains which can cause hygienic problems in the vegetable processing foods, Salmonella, Listeria and Staphylococcus strains were passage-cultured and then prepared by a centrifugation.

Carrot and spinach mostly used in bibimbob as the vegetable raw materials were washed, selected and then, the previously prepared strains were innoculated to be 10⁵∼10⁷ CFU/g, and vacuum-packed to use as test samples of the fresh vegetables.

In addition, the blanching and cooling processes were performed to said washed and selected carrot and spinach as test samples of the cooked vegetables, and previously prepared strains were innoculated to be 10⁵∼10⁷ CFU/g, and then vacuum-wrapped and used as test samples of the cooked vegetables.

### Example 3: The determination of the ultra-high pressure non-heating sterilization effect for the pathogenic strains

The ultra-high pressure treatment was performed by treating the vacuum-wrapped samples by laboratory scale High pressure processor under 100, 300, 500 MPa at the room temperature for 0, 5, 10, 15, 20 minutes, respectively. The ultra-high pressure come-up times was taken for 26 seconds to 2 minute and 30 seconds at 100∼500 MPa. After finishing the ultra-high pressure sterilization, the determination of the microorganisms was performed by culturing them at 37°C for 48 hours with the proper medium for each strain and then analyzing them by colony counting method.

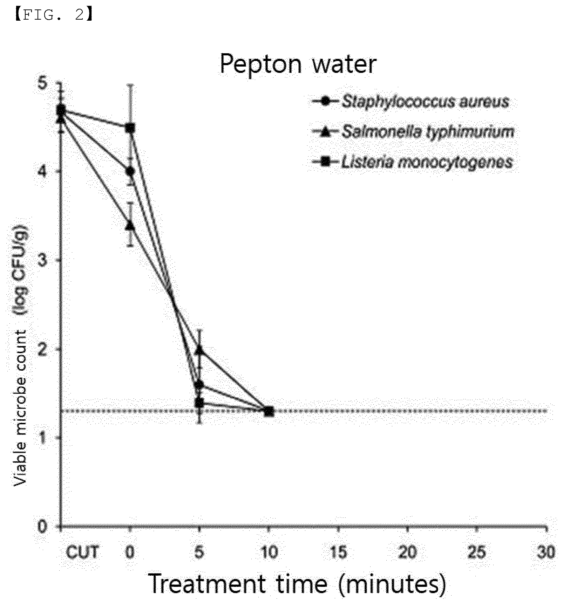

In order to investigate the effect on the structure of the vegetable and the contents when treating the ultra-high pressure, at first, the microorganism was innoculated on pepton water and then the degree of death was investigated. After testing the gram-negative strain, Staphylococcus and Listeria, and gram-positive strain, Salmonella, when treating them under the ultra-high pressure of 500 MPa for 5 minutes, all were become below 10² CFU/g, and after 10 minutes, the strains were decreased to the below of the detection limit, about 10⁵ CFU/g. The detailed test results are represented in FIG. 2.

### (1) The determination of the ultra-high pressure non-heating sterilization effect for the pathogenic strains in the fresh vegetables

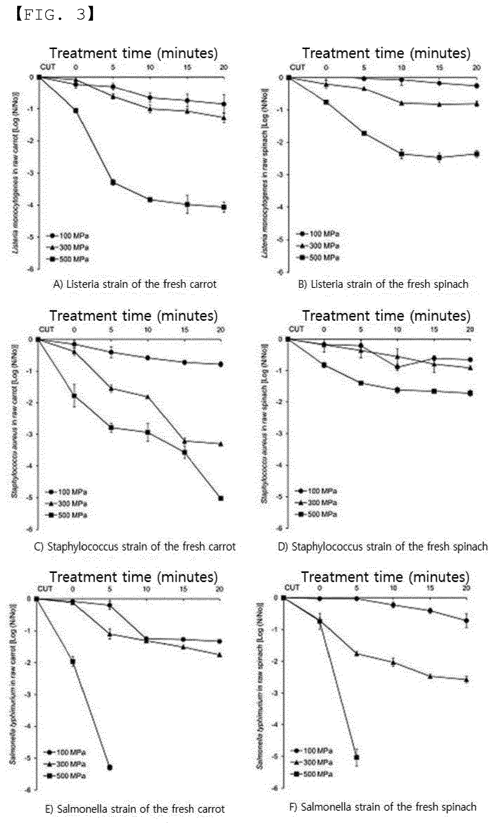

The effect of the ultra-high pressure sterilization effect was determined for the fresh vegetable samples prepared in Example 2 under various conditions. As a result of the test, most test groups which were ultra-high pressure non-heating sterilized exhibited the effect decreasing strains of 10² ∼ 10⁵ CFU/g, and the test results are represented in FIG. 3.

Although somewhat differences were occurred according to the kinds of microorganisms and vegetables, it was suggested that the ultra-high pressure was a good processing method for non-heatedly decreasing the various pathogenic strains.

### (2) The determination of the ultra-high pressure non-heating sterilization effect for the pathogenic strains in the cooked vegetable

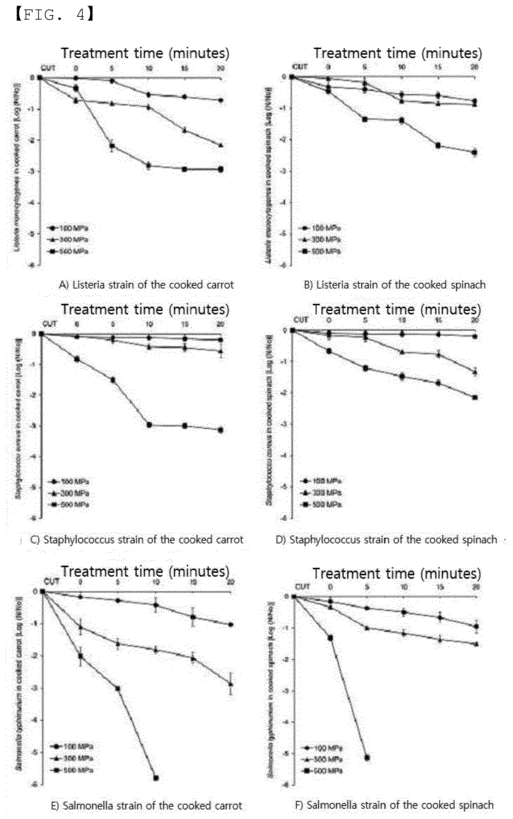

The ultra-high pressure sterilization effect was determined for the cooked vegetable samples prepared in Example 2 under the various conditions. As a result of the test, most test groups which were ultra-high pressure non-heating sterilized under 500 MPa for 5∼20 minutes exhibited the effect decreasing strains of 10² ∼ 10⁵ CFU/g, and the test results are represented in FIG. 4.

### (3) Comparison of the ultra-high pressure non-heating sterilization effect between fresh vegetable and the cooked vegetable

In Gram-positive strains, Listeria and Staphylococcus, the ultra-high pressure sterilization effect was somewhat decreased in the cooked vegetable went through the heating process such as blanching, and the reason was estimated that the cellular cytoplasm, cellular liquid, etc. were leaked outward by the heat at the time of heat-cooking, and therefore water was decreased, the change of the tissue and physicochemical components was occurred, and thus the sterilization effect was somewhat decreased since the ultra-high pressure transfer mediator for the microorganism was different from the condition of the fresh vegetable.

On the other hand, it was exhibited that in the case of Salmonella, it was a Gram-negative strain and was relatively well killed since it was weak in the heat resistance relative to Gram-positive strains having the cell wall structure consisting of peptidoglycan, Listeria and Staphylococcus, and was effectively killed since it had the pressure sensitivity under the ultra-high pressure, and the similar sterilization effect was exhibited regardless of the raw and cooked states.

### Example 4: Determination of the sterilization effect for the treatment in combination with the ultra-high pressure and the organic acids

In order to enhance the ultra-high non-heating sterilization effect, the test was performed to investigate the sterilization effect when treating in combination with the ultra-high pressure and the organic acids.

In order to investigate the correct sterilization effect for microorganisms in the present example, the pathogenic strains were cultured, diluted in the sterilized water and wrapped in the sterilized vinyl pouch, and then the ultra-high pressure sterilization was performed.

### (1) Treatment in combination with the addition of organic acids and the ultra-high pressure non-heating sterilization

The ultra-high pressure non-heating sterilization was performed under pH condition controlled with an organic acid such as lactic acid or HCl, at the pressure of 300 MPa for 5 minutes in the vegetable raw materials innoculated with Listeria strains.

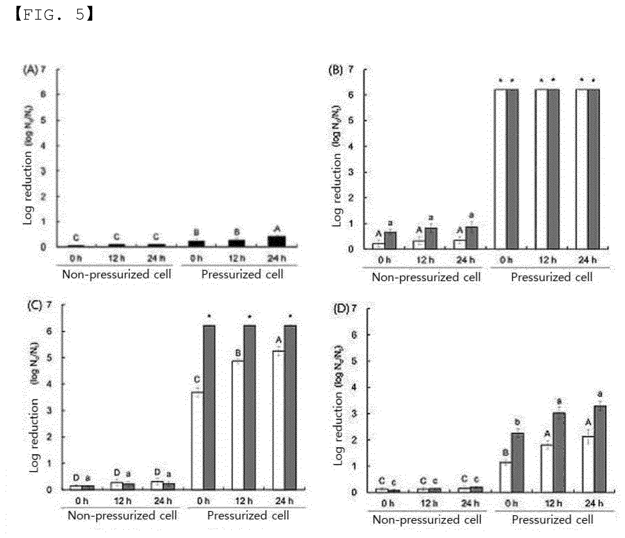

When performing the ultra-high pressure non-heating sterization after controlling the acidic pH to 4∼5 with lactic acid, the effect of the vegetable raw materials under the neutral condition of pH 7.2 which was non-controlling pH condition was compared with that ultra-high pressure non-heating sterilized at the pH 6.0, and the effects decreasing strains (Log reduction) soon after performing the ultra-high pressure treatment/non-treatment (0h), after 12 hours (12h), and after 24 hours (24h) are represented in FIG. 5.

FIG. 5 is a graph exhibiting the sterilization effects according to the ultra-high pressure treatment (pressurized cells) / non-treatment (Non-pressurized cells) and pH conditions ((A) pH 7.2, (B) : pH 4.0, (C) : pH 5.0, (D) : pH 6.0), and as a result of the test, the increasing of the effect decreasing strains of 10³∼10⁵ CFU/g was determined and thus the sterilization effect of 10⁶ CFU/g was exhibited.

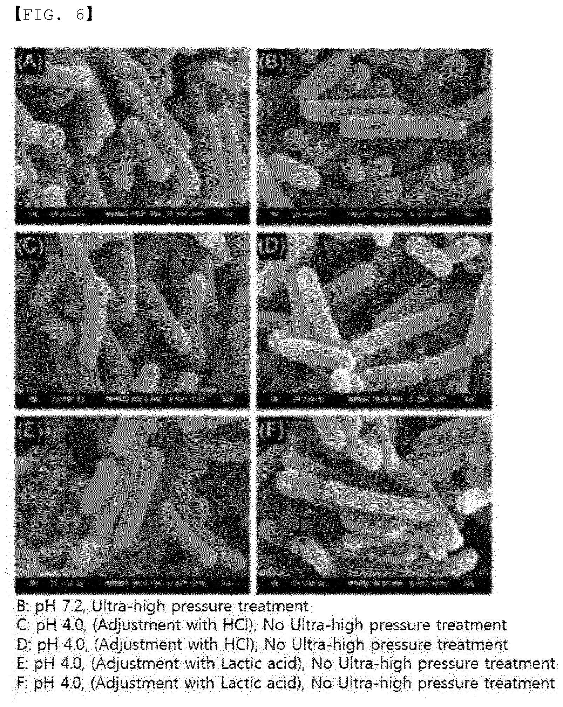

The death mechanism of Listeria strain under the ultra-high pressure and acidic conditions was determined in detail via a scanning electron microscope (SEM) and the results are represented in FIG. 6. As a result of the analysis, since it was reviewed that the shape of the cell became more longer and was considered that the death reason was due to the deformation of the cellular inner structure, not due to the destruction of the cell membrane.

### (2) Combination use of the addition of the organic acid and nisin, and the ultra-high pressure non-heating sterilization

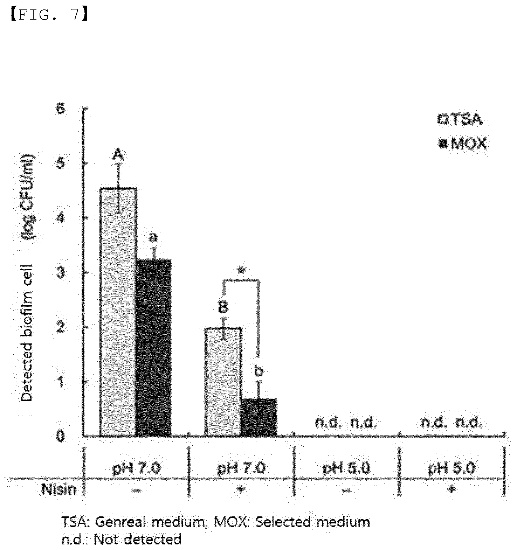

In order to further increase the sterilization effect when treating the combination of organic acid and ultra-high pressure non-heating sterilization, after adjusting pH to 5 by using the organic acid, nisin which was generated by lactobacillus of bacteriocin series was further added as the natural antimicrobial and the ultra-high pressure non-heating sterilization was performed at the pressure of 400 MPa for 20 minutes, and then the results were represented in FIG. 7.

In the above case, TSA is a general medium which is possible to determine the number of strains for Listeria strain, and MOX is a selection medium which is possible to determine Listeria strain forming biofilm. Both of these media were partitively used, sterilization effects for general Listeria strain and Listeria strain forming biofilm were separately observed, and then, the results are represented in FIG. 7.

When adjusting pH to 5.0 by using lactic acid, since 10⁴∼10⁵ CFU/g of Listeria strains were decreased without the addition of nisin, it was difficult to distinguish the effect of the nisin addition, but it was expected that the sterilization effect was theoretically increased when the ultra-high pressure was treated after performing the combination addition of the organic acid and nisin.

In contrast, in the case of pH 7.0 without adding the organic acid, as a result of that the sterilization effect was determined at the time of adding nisin, the effect decreasing the strain was increased to about 10² CFU/g. And also, in the case of Listeria strain forming biofilm, a major cause of the pollution which can make the strain to attach to the facility surface, and the like, and to grow well, since the sterilization effect of 10² CFU/g or more was appeared when treating the combination of nisin and ultra-high pressure, it could be considered that several advantages were presented in the light of the hygiene securement.

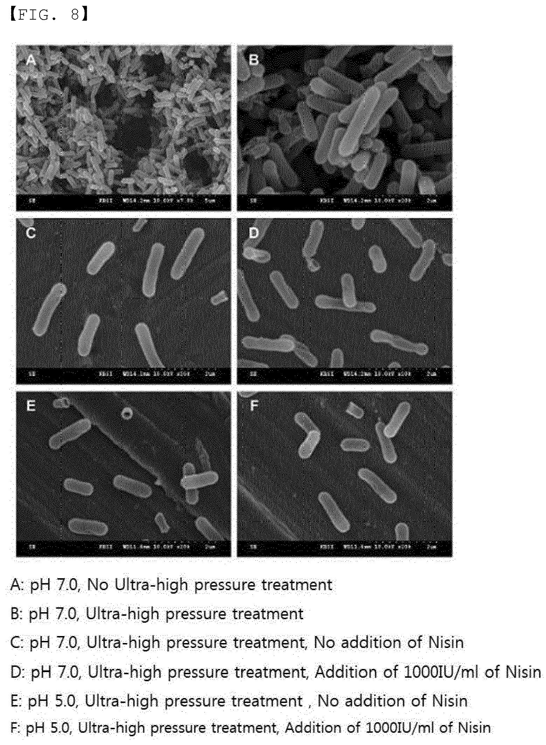

In order to review the death of Listeria strain by the ultra-high pressure and the above treatment in detail, Scanning Electron Microscope (SEM) observation was proceed and the results were represented in FIG. 8. As a result of the analysis, it was considered that nicin was penetrated to the inner of the microbial better along with that the ultra-high pressure effectively destructs the
structure of the cell membrane, and thus the increasement of the sterilization effect was raised.

### Example 5: Test for storage of the fresh and cooked vegetables which were ultra-high pressure non-heating sterilized

The test for reviewing the change in the property of the vegetables being ultra-high pressure non-heating sterilized and the contents of the components and for investigating the storage in refrigerator were performed for the carrot and spinach under the various condition.

In the case of the storage test, vegetables were prepared by only the heating-cooking (Thermal, heat-treating) and by further adding the ultra-high pressure sterilization to it and then it was checked as to whether or not of the growing of the aerobic and anaerobic microorganisms while storing them at 10°C and 15°C for 0∼30 days

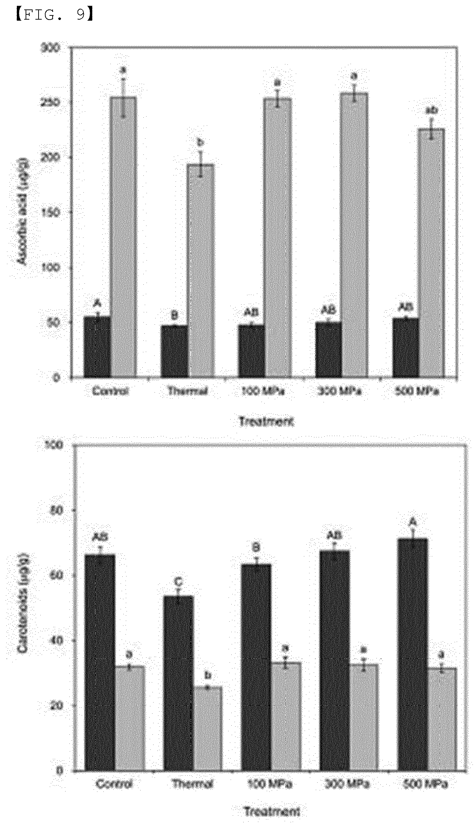

The change of the contents for ascorbinic acid and cartinoid of the vegetables being ultra-high pressure non-heating treated under the various pressure conditions (control, heating-cooking (Thermal, Heat-treatment), non-heat treating ultra-high pressure sterilization 100MPa, 300MPa, 500MPa) was determined, and the results are represented in FIG. 9. As shown in FIG 9, since it represents that the representative anti-oxidation components, ascorbinic acid and cartinoid, which are easily destructed by the heat treatment (Thermal) were remained in relative large amounts when treating with the ultra-high pressure (100MPa, 300 MPa, 500 MPa) in all of the carrot (■) and spinach (□), it can be considered that there is an advantage in veiw of maintaining the functional components which are the great advantage of the vegetable.

In addition, in order to review the property of vegetables treated with ultra-high pressure non-heating sterilization at the pressure of 500 MPa for 20 minutes in detail, the Scanning Electron Microscopic (SEM) observations were proceeded according to each process condition (A∼H), and the results are represented in FIG. 10.

As a result of the test, since there was no great difference for the organoleptic quality such as the taste, flavor, color, texture, and the like, between no treatment control and the test group practicing the ultra-high pressure non-heating sterilization under 500 MPa, the applicability of the ultra-high pressure as not only the hygienic treatment, but also the optimal processing method for enhancing the quality could be finally determined.

In addition, the storage test was performed under the refrigerated condition after treating the heating-cooked vegetables with the ultra-high pressure non-heating sterilization, and the results were represented in the below Tables 1∼4.

It was exhibited that the test group treated with 500 MPa for 3 minutes after heating-cooking exhibited the effect decreasing strains on average about 10³ CFU/g relative to the simple heating-cooked control group without applying the ultra-high pressure, when storing it at the temperature 10°C∼15°C for 2∼3 weeks and was also increased in the storage period. Since the effect decreasing strains of 10³ ∼ 10⁵ CFU/g was enhanced in the completely seasoned vegetable side dishes such as bean sprouts, brackeny and the like as heating-cooked, the storage in the refrigeration for 3 weeks, which was not able in the existing heating-cooking method, was possible.

### Example 6: The determination of the sterilization effect for the spore of bacillus via the ultra-high pressure heat treatment

The effect of the ultra-high pressure heating sterilization for the spore of Bacillus line which causes the problems in hygiene and quality of the vegetable-based processing foods was reviewed by using the heat-resistant vinyl pouch packing the Bacillus spore suspension and the results were represented in FIG. 11.

As a result of the test, when applying the ultra-high pressure of 700 MPa at the temperature of 75°C, the sterilization effect for Bacillus spore of about 10³ CFU/g was reviewed. In the case of the vegetable processing foods, the high temperature- and high pressure-heating sterilization such as a retort could not applied due to the property of the product quality, and the sterilization was difficult since the chemical resistance for the natural antimicrobial was great due to the Cortex and coat being the unique structure of the spore, but the present invention could develop new low temperature-sterilization method which could effectively sterilize the Bacillus line spore under the mild condition of about 75°C.

**[Table 1]**

| Test result for the storage of the pre-treated and ultra-high pressure sterilized carrot | | | | | | |
|---|---|---|---|---|---|---|
| Sample name | Storage temperature | 0 day (CFU/mL) | 3 day (CFU/mL) | 7 day (CFU/mL) | 14 day (CFU/mL) | 30 day (CFU/mL) |
| Sous-vide Only | 10°C | 1.00±0.01×10¹ | 1.00±0.03×10¹ | 7.60±0.40×10⁴ | 6.10±0.30×10⁴ | TNTC |
| | 15°C | | 5.00±0.02×10¹ | 1.03±0.13×10⁶ | 1.01±0.06×10⁶ | TNTC |
| Sous-vide + HPP | 10°C | 2.00±0.02×10¹ | 1.00±0.01×10¹ | 2.15±0.25×10² | 9.15±0.85×10⁴ | 6.33±0.50×10⁶ |
| | 15°C | | ND | 9.25±0.45×10⁴ | 5.45±0.05×10⁶ | TNTC |
| Cook-chill Only | 10°C | 4.35±0.65×10² | 1.65±0.16×10⁶ | 3.75±0.15×10⁷ | TNTC | TNTC |
| | 15°C | | 5.50±0.50×10⁶ | TNTC | 4.70±0.20×10⁷ | TNTC |
| Cook-chill + HPP | 10°C | 2.00±0.01×10¹ | 3.00±0.01×10¹ | ND | 1.00±0.10×10¹ | 3.50±0.03×10⁴ |
| | 15°C | | ND | 3.19±0.03×10³ | 7.30±0.10×10⁴ | TNTC |

| | | | | | | |
|---|---|---|---|---|---|---|
| HPP: ultra-high pressure treatment | | | | | | |

**[Table 2]**

| Test results of storage for pre-treated and ultra-high pressure sterilized spinach | | | | | | |
|---|---|---|---|---|---|---|
| Sample name | Storage temperature | 0 day (CFU/mL) | 3 day (CFU/mL) | 7 day (CFU/mL) | 14 day (CFU/mL) | 30 day (CFU/mL) |
| Sous-vide Only | 10°C | 1.02±0.06×10⁴ | 9.85±1.15×10³ | TNTC | TNTC | TNTC |
| | 15°C | | 1.10±0.02×10⁶ | TNTC | TNTC | TNTC |
| Sous-vide + HPP | 10°C | 1.26±0.04×10⁴ | 8.20±0.30×10³ | 3.70±0.20×10⁵ | 7.50±3.50×10³ | TNTC |
| | 15°C | | 6.60±0.30×10³ | TNTC | TNTC | TNTC |
| Cook-chill Only | 10°C | 7.15±0.15×10³ | 3.60±0.10×10⁵ | TNTC | TNTC | TNTC |
| | 15°C | | 3.61±0.03×10⁷ | TNTC | TNTC | TNTC |
| Cook-chill + HPP | 10°C | 2.13±0.15×10³ | 1.23±0.36×10³ | 8.85±0.05×10³ | 1.21±0.08×10³ | 4.80±0.25×10⁴ |
| | 15°C | | 1.41±0.15×10⁶ | TNTC | TNTC | TNTC |

**[Table 3]**

| The test result of the storage for aerobic strain when treating with ultra-high pressure treatment after completing seasoning (heating seasoning) for carrot and spinach | | | | | |
|---|---|---|---|---|---|
| Sample name | Storage temperat ure | 0 day (CFU/mL) | 3 day (CFU/mL) | 7 day (CFU/mL) | 14 day (CFU/mL) |
| brackeny Control | 10°C | 2.85±0.95X10³ | 2.15±0.15X10³ | 2.00±0.04X10³ | 7.10:1:0.20X10⁴ |
| | 15°C | | 2.85±0.95X10⁴ | TNTC | TNTC |
| brackeny HPP | 10°C | 3.00±1.00X10¹ | 1.77±0.46X10⁴ | 4.00±3.00X10³ | 1.50±0.50X10² |
| | 15°C | | 2.00±1.00X10¹ | 2.00±1.00X10¹ | 3.25±0.05X10³ |
| Carrot Control | 10°C | 3.12±0.88X10³ | 3.00±1.00X10² | 3.00±1.00X10² | 8.50±0.50X10² |
| | 15°C | | 1.15±0.09X10⁴ | 1.05±0.15X10⁴ | 3.80±0.10X10⁵ |
| carrot HPP | 10°C | 2.00±1.00X10¹ | 4.25±0.25X10³ | 3.50±1.50X10³ | 1.00±0.02X10² |
| | 15°C | | 1.50±0.50X10¹ | 1.50±0.50X10¹ | 1.40±0.20X10¹ |
| Spinach Control | 10°C | 1.58±0.40X10³ | 5.65±0.75X10³ | 2.42±0.09X10³ | 6.00±0.90X10⁵ |
| | 15°C | | 4.05±0.05X10⁵ | 4.60±0.50X10⁶ | 9.50±0.50X10⁵ |
| spinach HPP | 10°C | ND | 1.08±0.93X10³ | 1.08±0.93X10³ | 1.08±0.93X10³ |
| | 15°C | | 8.05±0.05X10³ | 8.05±0.05X10³ | 8.05±0.05X10³ |
| Bean sprouts Control | 10°C | 2.60±0.20X10³ | 5.25±0.25X10³ | 2.41±0.84X10⁵ | 1.28±0.54X10⁷ |
| | 15°C | | 4.05±0.05X10⁵ | TNTC | TNTC |
| Bean sprouts HPP | 10°C | ND | 2.49±1.92X10³ | 2.00±1.00X10³ | 3.00±0.02X10² |
| | 15°C | | 5.24±0.21X10⁵ | 5.65±2.25X10⁶ | 3.70±0.30X10⁷ |

**[Table 4]**

| The test result of the storage for anaerobic strain when treating ultra-high pressure after completely seasoning (heating seasoning) of carrot and spinach | | | | | |
|---|---|---|---|---|---|
| Sample name | Storage temperature | 0 day (CFU/mL) | 3 day (CFU/mL) | 7 day (CFU/mL) | 14 day (CFU/mL) |
| brackeny Control | 10°C | 1.07±0.09X10³ | 1.55±0.25X10³ | 1.55±0.25X10³ | 5.40±0.30X10⁴ |
| | 15°C | | 1.07±0.09X10³ | TNTC | TNTC |
| brackeny HPP | 10°C | ND | 1.37±0.29X10⁴ | 1.00±0.07X10³ | 1.00±0.12X10³ |
| | 15°C | | ND | 2.00±1.00X10² | 3.25±0.30X10⁴ |
| Carrot Control | 10°C | 1.66±0.03X10³ | 2.50±0.50X10² | 1.00±0.10X10³ | 1.20±0.30X10³ |
| | 15°C | | 3.50±1.50X10² | 3.50±1.50X10² | 1.52±0.36X10⁵ |
| carrot HPP | 10°C | ND | 4.30±0.30X10³ | 1.00±0.50X10³ | 1.00±0.20X10³ |
| | 15°C | | ND | 1.00±0.20X10¹ | 1.00±0.60X10¹ |
| Spinach Control | 10°C | 3.00±0.10X10² | 3.00±0.40X10³ | 7.55±0.25X10⁴ | 4.30±0.60X10⁵ |
| | 15°C | | 4.00±0.20X10⁵ | 4.60±0.80X10⁶ | 1.50±0.40X110⁶ |
| spinach HPP | 10°C | 1.00±0.05X10¹ | 1.50±0.50X10¹ | 1.05±0.35X10³ | 1.05±0.35X10³ |
| | 15°C | | 1.00±0.10X10⁴ | 1.00±0.10X10⁴ | 1.00±0.10X10⁴ |
| Bean sprouts Control | 10°C | 1.23±0.21X10³ | 1.75±0.45X10³ | 5.75±1.05X10⁴ | 1.79±0.255X10⁷ |
| | 15°C | | 1.68±0.24X10⁴ | 3.54±0.14X10⁷ | TNTC |
| Bean sprouts HPP | 10°C | ND | 3.50±0.10X10¹ | 5.00±0.15X10³ | 5.00±0.40X10³ |
| | 15°C | | 1.20±0.50X10⁴ | 3.50±0.50X10⁶ | 3.90±0.50X10⁷ |

| | | | | | |
|---|---|---|---|---|---|
| TNTC : Too numerous to count | | | | | |

## Claims

1. A method for processing vegetable foods comprising:
(a) step for selecting vegetable raw materials;
(b) step for wrapping the selected vegetable raw materials; and
(c) step for sterilization by applying to the wrapped vegetable raw materials a pressure of 200∼900 MPa at a room temperature for 3∼60 minutes by using an ultra-high pressure;
wherein said method further comprises a semi-drying step for partially removing water of the selected vegetable raw materials and a step for adding a natural antimicrobial agent, wherein the natural antimicrobial agent comprises organic acid and Nisin, before the step (b).

2. A method for processing vegetable foods comprising:
(a) step for selecting vegetable raw materials;
(b) step for wrapping the selected vegetable raw materials; and
(c) step for sterilization by applying to the wrapped vegetable raw materials a pressure of 500∼900 MPa at a temperature of 70∼100°C for 3∼60 minutes by using an ultra-high pressure;
wherein said method further comprises a semi-drying step for partially removing water of the selected vegetable raw materials and a step for adding a natural antimicrobial agent, wherein the natural antimicrobial agent comprises organic acid and Nisin, before the step (b).

3. The method for processing vegetable foods according to claim 1 or 2, further comprising:
boiling water and cooling steps for blanching the wrapped vegetable raw materials and then cooling them after the step (b).

4. The method for processing vegetable foods according to claim 1, wherein the natural antimicrobial agent is added as 0.05∼3% (w/w) based on the total weight.

5. The method for processing vegetable foods according to claim 1, wherein the organic acid is selected from the group consisting of lactic acid, citric acid, acetic acid, and succinic acid.

6. The method for processing vegetable foods according to claim 1, wherein the organic acid is lactic acid.

7. The method for processing vegetable foods according to claim 1, wherein the pH is controlled to pH 4∼5 with the natural antimicrobial agent.

## Patentansprüche

1. Verfahren zum Verarbeiten pflanzlicher Lebensmittel, umfassend:
(a) Schritt zum Auswählen pflanzlicher Ausgangsstoffe;
(b) Schritt zum Einpacken der ausgewählten pflanzlichen Ausgangsstoffe; und
(c) Schritt zum Sterilisieren unter Einsatz eines Ultrahochdrucks durch Ausüben eines Drucks von 200^{∼}900 MPa auf die eingepackten pflanzlichen Ausgangsstoffe bei einer Zimmertemperatur während 3^{∼}60 Minuten;
wobei das Verfahren vor dem Schritt (b) weiter einen Entfeuchtungsschritt zum teilweisen Entfernen von Wasser aus den ausgewählten pflanzlichen Ausgangsstoffen und einen Schritt zum Zugeben einer natürlichen antimikrobiellen Substanz umfasst, wobei die natürliche antimikrobielle Substanz eine organische Säure und Nisin umfasst.

2. Verfahren zum Verarbeiten pflanzlicher Lebensmittel, umfassend:
(a) Schritt zum Auswählen pflanzlicher Ausgangsstoffe;
(b) Schritt zum Einpacken der ausgewählten pflanzlichen Ausgangsstoffe; und
(c) Schritt zum Sterilisieren unter Einsatz eines Ultrahochdrucks durch Ausüben eines Drucks von 500^{∼}900 MPa auf die eingepackten pflanzlichen Ausgangsstoffe bei einer Temperatur von 70^{∼}100 °C während 3^{∼}60 Minuten;
wobei das Verfahren vor dem Schritt (b) weiter einen Entfeuchtungsschritt zum teilweisen Entfernen von Wasser aus den ausgewählten pflanzlichen Ausgangsstoffen und einen Schritt zum Zugeben einer natürlichen antimikrobiellen Substanz umfasst, wobei die natürliche antimikrobielle Substanz eine organische Säure und Nisin umfasst.

3. Verfahren zum Verarbeiten pflanzlicher Lebensmittel nach Anspruch 1 oder 2, weiter umfassend:
Schritte zum Kochen von Wasser und Abkühlen zwecks Blanchieren der eingepackten pflanzlichen Ausgangsstoffe und anschließendem Abkühlen derselben nach dem Schritt (b).

4. Verfahren zum Verarbeiten pflanzlicher Lebensmittel nach Anspruch 1, wobei die natürliche antimikrobielle Substanz, bezogen auf das Gesamtgewicht, mit 0,05^{∼}3% (w/w) zugegeben wird.

5. Verfahren zum Verarbeiten pflanzlicher Lebensmittel nach Anspruch 1, wobei die organische Säure aus der Gruppe ausgewählt ist, die aus Milchsäure, Zitronensäure, Essigsäure und Bernsteinsäure besteht.

6. Verfahren zum Verarbeiten pflanzlicher Lebensmittel nach Anspruch 1, wobei die organische Säure Milchsäure ist.

7. Verfahren zum Verarbeiten pflanzlicher Lebensmittel nach Anspruch 1, wobei der pH-Wert mit der natürlichen antimikrobiellen Substanz auf pH 4^{∼}5 eingestellt wird.

## Revendications

1. Procédé de traitement d'aliments d'origine végétale comprenant :
(a) une étape de sélection de matières premières végétales ;
(b) une étape d'enveloppement des matières premières végétales sélectionnées ; et
(c) une étape de stérilisation par l'application, aux matières premières végétales enveloppées, d'une pression de 200^{∼}900 MPa à une température ambiante pendant 3^{∼}60 minutes en utilisant une ultra haute pression ;
dans lequel ledit procédé comprend en outre une étape de semi-séchage pour enlever partiellement l'eau des matières premières végétales sélectionnées et une étape d'ajout d'un agent antimicrobien naturel, dans lequel l'agent antimicrobien naturel comprend un acide organique et de la nisine, avant l'étape (b).

2. Procédé de traitement d'aliments d'origine végétale comprenant :
(a) une étape de sélection de matières premières végétales ;
(b) une étape d'enveloppement des matières premières végétales sélectionnées ; et
(c) une étape de stérilisation par l'application, aux matières premières végétales enveloppées, d'une pression de 500^{∼}900 MPa à une température de 70^{∼}100 °C pendant 3^{∼}60 minutes en utilisant une ultra haute pression ;
dans lequel ledit procédé comprend en outre une étape de semi-séchage pour enlever partiellement l'eau des matières premières végétales sélectionnées et une étape d'ajout d'un agent antimicrobien naturel, dans lequel l'agent antimicrobien naturel comprend un acide organique et de la nisine, avant l'étape (b).

3. Procédé de traitement d'aliments d'origine végétale selon la revendication 1 ou 2, comprenant en outre :
les étapes d'ébullition d'eau et de refroidissement pour blanchir les matières premières végétales enveloppées et puis les refroidir après l'étape (b).

4. Procédé de traitement d'aliments d'origine végétale selon la revendication 1, dans lequel l'agent antimicrobien naturel est ajouté à un taux de 0,05^{∼}3 % (en poids) sur la base du poids total.

5. Procédé de traitement d'aliments d'origine végétale selon la revendication 1, dans lequel l'acide organique est sélectionné dans le groupe consistant en acide lactique, acide citrique, acide acétique et acide succinique.

6. Procédé de traitement d'aliments d'origine végétale selon la revendication 1, dans lequel l'acide organique est l'acide lactique.

7. Procédé de traitement d'aliments d'origine végétale selon la revendication 1, dans lequel le pH est régulé à pH 4^{∼}5 avec l'agent antimicrobien naturel.
